# EUROPEAN PATENT SPECIFICATION

(11) **EP 4 371 672 B1**
(45) Date of publication and mention of the grant of the patent: **17.09.2025**
(21) Application number: 23846817.7
(22) Date of filing: 23.06.2023
(51) Int. Cl.: B05C 5/02, B05C 11/10, H01M 4/04

(54) **SLOT DIE COATER**
SCHLITZDÜSENBESCHICHTER
DISPOSITIF D' ENDUCTION À FILIÈRE À FENTE

(30) Priority: 29.07.2022 KR 20220094861; 15.05.2023 KR 20230062678
(43) Date of publication of application: 22.05.2024
(73) Proprietor: LG Energy Solution, Ltd., Seoul 07335 (KR)
(72) Inventor: PARK, Joon-Sun, Daejeon 34122 (KR); KIM, Guk-Tae, Daejeon 34122 (KR); KIM, Hyun-Min, Daejeon 34122 (KR)
(74) Representative: Plasseraud IP
(86) International application number: PCT/KR2023/008781
(87) International publication number: WO 2024/025158

(56) References cited:
- CN-B- 101 122 747
- JP-A- 2006 181 453
- KR-A- 20040 068 949
- KR-A- 20100 023 580
- KR-A- 20100 023 580
- KR-A- 20220 041 648
- KR-A- 20220 043 030
- KR-A- 20220 043 035
- US-A1- 2013 236 651
- US-A1- 2022 016 665

## Description

### TECHNICAL FIELD

The present disclosure relates to a slot die coater, and particularly, to a slot die coater that improves die block deformation due to internal pressure. The present application claims priority to Korean Patent Application No. 10-2022-0094861 filed on July 29, 2022 and Korean Patent Application No. 10-2023-0062678 filed on May 15, 2023.

### BACKGROUND ART

As the technology development and demand for mobile devices increase, demand for secondary batteries as an energy source is rapidly increasing, and these secondary batteries essentially include an electrode assembly, which is a power generation element. The electrode assembly has a form in which a positive electrode, a separator, and a negative electrode are stacked at least once, and the positive electrode and the negative electrode are prepared by applying a positive electrode active material slurry and a negative electrode active material slurry to a current collector made of aluminum foil and copper foil, respectively, and drying. These secondary batteries generally use lithium-containing cobalt oxide LiCoO₂ with a layered crystal structure, lithium-containing manganese oxides such as LiMnO₂ with a layered crystal structure and LiMn₂O₄ with a spinel crystal structure, and lithium-containing nickel oxide LiNiO₂, as positive electrode active materials. In addition, carbon-based materials are mainly used as negative electrode active materials, and recently, mixed use with silicon-based materials and silicon oxide-based materials having an effective capacity 10 times or more than carbon-based materials has been considered due to the increase in demand for high-energy lithium secondary batteries. In order to ensure uniform charge/discharge characteristics of secondary batteries, the positive electrode active material slurry and the negative electrode active material slurry should be evenly coated on a current collector, and conventionally, a slot die coater is used.

KR 2010 0023580 A discloses a slit nozzle. KR 2004 0068949 A 2 discloses a method of improving coating uniformity. KR 2022 0041648 A discloses a dual slot die coater. CN 101 122 747 B discloses a slit coating apparatus. US 2013/236651 A1 discloses a shim member, die coater, and method for producing coating film.

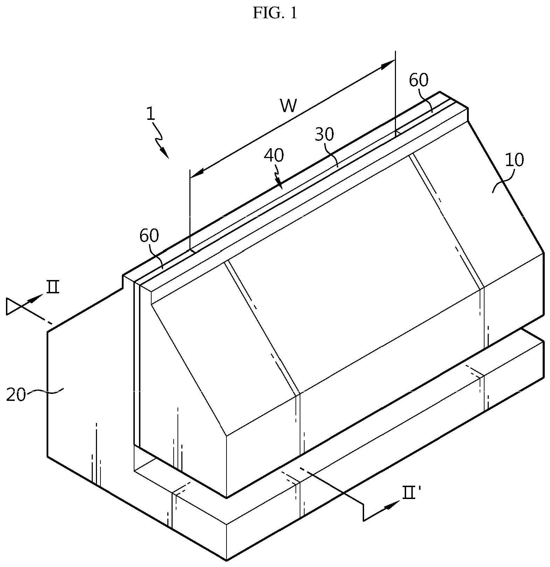

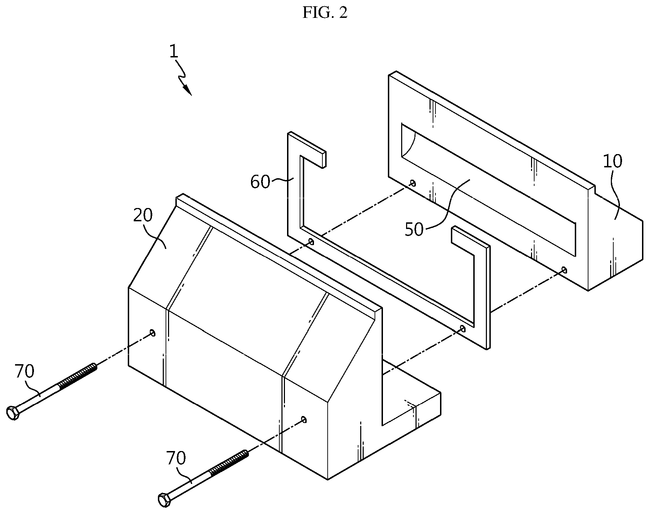

FIG. 1 is a perspective view showing a conventional slot die coater, and FIG. 2 is an exploded perspective view of a conventional slot die coater.

Referring to FIGS. 1 and 2, in the electrode manufacturing method using the slot die coater 1, an active material slurry discharged from the slot die coater 1 is applied on a current collector (not shown) transferred by a coating roll (not shown). The active material slurry discharged from the slot die coater 1 is widely applied on one surface of the current collector to form an active material layer.

The slot die coater 1 includes two die blocks 10, 20, and a slot 30 is formed between the two die blocks 10, 20. The two die blocks 10, 20 are fastened by a coupling bolt 70. An active material layer may be formed by discharging the active material slurry through a discharge port 40 communicating with the slot 30. The slot die coater 1 has the advantage of enabling high-speed application compared to bar coating or comma coating, and thus is widely applied in terms of high productivity.

The coating width of the active material layer coated on the current collector is determined by the width W of the slot 30. When the coating width needs to be changed, various coating widths may be implemented by changing the inner space of the manifold 50 and the shim 60 that determines the width W of the slot 30.

The slot die coater 1 exemplified in FIG. 1 is a vertical die type in which the active material slurry is discharged in a direction opposite to gravity. In the case of coating by configuring the slot die coater 1 in a vertical direction, there is a phenomenon that the gap between the die blocks 10, 20 is widened due to the internal pressure of the die blocks 10, 20. When implementing an uncoated portion (a portion that is not coated on the current collector) by using the shim 60 between the two die blocks 10, 20, if the gap between the two die blocks 10, 20 is widened and then the active material slurry is introduced, the active material slurry is intermittently scattered on the uncoated portion, resulting in a problem of surface defects.

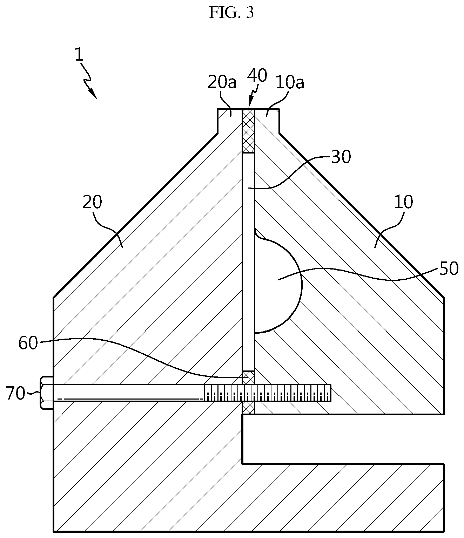

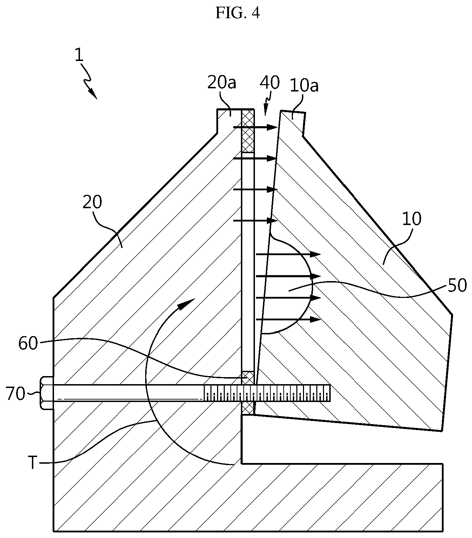

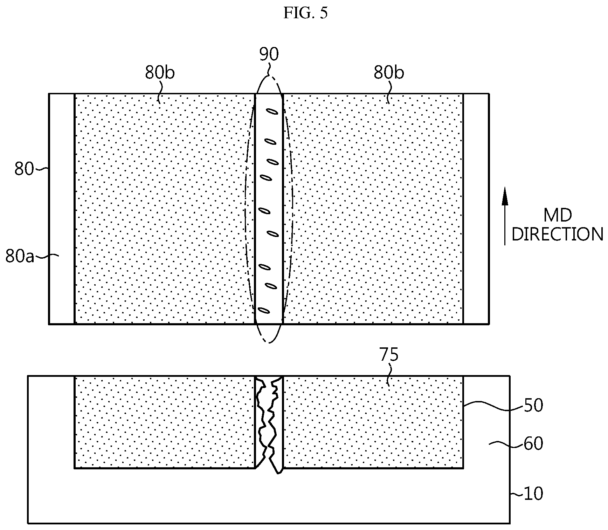

FIG. 3 is a cross-sectional view showing the initial coupling state of a conventional slot die coater, and corresponds to the cross-section taken along line II-II' of FIG. 1. FIG. 4 is a cross-sectional view showing deformation due to pressure inside a die in a conventional slot die coater. FIG. 5 is a view showing a problem in that a slurry permeates into a die in a conventional slot die coater and thus surface defects occur on an uncoated portion of a current collector.

In FIG. 3, two die blocks 10, 20 are fastened by the coupling bolt 70. When the internal pressure of the die blocks 10, 20 increases, a torque T is generated by the internal pressure with the coupling bolt 70 as a starting point (reference point), as shown in FIG. 4. As a result, the farthest portion receives the greatest force, and thus the die lips 10a, 20a, which are the front ends of the die blocks 10, 20, spread apart. In that case, the active material slurry permeates even into the portion where the active material slurry should be prevented from being discharged by blocking it with the shim 60.

Accordingly, as shown in FIG. 5, the active material slurry 75 permeates even into the inner side of the die blocks 10, 20 where the active material slurry 75 should not be present, thereby causing a surface defect 90 on the uncoated portion 80a of the current collector 80. The absence of the surface defect 90 prevents the occurrence of a slitting defect when slitting along the uncoated portion 80a formed in the MD direction to form an electrode with each active material layer 80b, and thus there is no occurrence of electrode disconnection after the secondary battery is manufactured due to the surface defect 90 remained on the uncoated portion 80a.

### DISCLOSURE

### Technical Problem

The present disclosure is designed to solve the problems of the related art, and therefore the present disclosure is directed to preventing the discharge of an active material slurry on an uncoated portion due to an increase in die internal pressure.

Accordingly, the present disclosure is directed to providing a slot die coater that improves die block deformation due to internal pressure.

However, technical problems to be solved by the present disclosure are not limited to the above-described problems, and other problems not mentioned herein may be clearly understood by those skilled in the art from the following description of the present disclosure.

### Technical Solution

A slot die coater of the present disclosure for solving the above-described problemis as laid out in the attached set of claims. It includes an upper plate and a lower plate assembled with each other to form a discharge port; and a shim interposed between the lower plate and the upper plate to form a slot communicating with the discharge port, wherein the upper plate has a groove recessed into the upper plate parallel with the shim above the slot, and further includes a taper block and a pressure bolt configured to fit into the groove and apply a pressing force to the shim.

A height of the groove is gradually lowered toward the inside of the groove, for adjustment of an inclination of the taper block.

The pressure bolt may pass through the taper block from the front side of the groove and may be fastened to the upper plate.

The groove may be recessed from the front surface of the upper plate toward the rear surface, and the pressure bolt may be fastened to the taper block at the front surface of the upper plate.

The taper block may be fastened to the pressure bolt to move back and forth in a direction parallel to the direction of the discharge port, and may generate a force due to a height difference between the groove and the taper block to press the shim.

The shim may include a plurality of extensions vertically connected to the base portion and extending toward the discharge port to include a plurality of openings, wherein the horizontal length of the taper block may not be greater than the horizontal length of the extension, and the taper block may be configured to fit into the groove at a position corresponding to the extension.

The taper block may be provided at a position corresponding to an extension excluding the extensions on a side among the plurality of extensions.

The slot die coater may further include a manifold in the lower plate, wherein the length of the taper block may be shorter than the length of a land, which is an area from the front end of the manifold to the discharge port.

According to one aspect of the present disclosure, the groove is formed on the discharge port side.

A bolt groove into which the pressure bolt is fastened may be formed at a position aligned with the groove.

A hole may be formed by being aligned with the bolt groove in the taper block so that the pressure bolt may pass therethrough.

According to another aspect of the present disclosure, the pressure bolt extends through the upper plate from the rear surface of the upper plate and is fastened to the taper block.

A residual hole is included in the width direction in the rear surface of the upper plate so that the pressure bolt may be inserted.

The pressure bolt and the taper block may be provided in plurality along the width direction.

A thread to which the pressure bolt may be fastened may be formed within the taper block.

The residual hole may be formed from the rear surface of the upper plate to the front surface, the groove may be formed from the front surface of the upper plate to the rear surface, and the residual hole may be formed at a position aligned with the groove.

A manifold for accommodating a coating liquid may be provided in the lower plate, and the manifold may communicate with the slot.

The slot die coater may discharge and apply the coating liquid onto a substrate through the discharge port, wherein the shim may have a plurality of openings by intermittently cutting one area thereof to determine the coating width of the coating layer applied on the substrate.

The taper block and the pressure bolt may press the shim without affecting the opening to prevent the gap between the upper plate and the lower plate from widening.

### Advantageous Effects

According to the present disclosure, by changing the structure of an upper plate in the slot die coater and further including a taper block and a pressure bolt, it is possible to prevent the discharge of the active material slurry on the uncoated portion due to an increase in pressure inside the slot die.

Accordingly, it is possible to improve surface defects during electrode formation by preventing the discharge of the active material slurry on the uncoated portion. In particular, when forming the active material layer in the form of a stripe pattern, the active material layer may be stably formed without causing pattern defects on the uncoated portion.

By using the slot die coater of the present disclosure, it is possible to uniformly form a coating layer, particularly an electrode active material layer, with a desired thickness and shape.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view showing a conventional slot die coater.
FIG. 2 is an exploded perspective view of a conventional slot die coater.
FIG. 3 is a cross-sectional view showing the initial coupling state of a conventional slot die coater.
FIG. 4 is a cross-sectional view showing deformation due to pressure inside a die in a conventional slot die coater.
FIG. 5 is a view showing a problem in that a slurry permeates into a die in a conventional slot die coater and thus surface defects occur on an uncoated portion of a current collector.
FIG. 6 is a perspective view showing a slot die coater according to an embodiment of the present disclosure.
FIG. 7 is a cross-sectional view perpendicular to the width direction of the slot die coater shown in FIG. 6.
FIG. 8 is a view showing a modified example of the slot die coater shown in FIG. 7.
FIG. 9 is another cross-sectional view perpendicular to the width direction of the slot die coater shown in FIG. 6.
FIG. 10 is a partially enlarged view of FIG. 7.
FIG. 11 is a front view of the slot die coater shown in FIG. 6.
FIG. 12 is a perspective view showing an example of a shim that may be included in the slot die coater shown in FIG. 6.
FIG. 13 is a perspective view showing a slot die coater according to another embodiment of the present disclosure.
FIG. 14 is a modified example of FIG. 13.
FIG. 15 is a cross-sectional view perpendicular to the width direction of the slot die coater shown in FIG. 13.
FIG. 16 is a cross-sectional view perpendicular to the width direction of the slot die coater shown in FIG. 14.
FIG. 17 is a perspective view of a modified example of the slot die coater shown in FIG. 13 in another direction.
FIG. 18 is a perspective view showing an example of a shim that may be included in the slot die coater shown in FIG. 13.
FIG. 19 is a partially enlarged view of FIG. 17.
FIG. 20 is a perspective view of the slot die coater shown in FIG. 17 in another direction.
FIG. 21 is a modified example of FIG. 20.

### DETAILED DESCRIPTION

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure.

The same reference numerals refer to the same components. Also, in the drawings, the thickness, ratio, and dimensions of the components may be exaggerated for effective description of the technical content.

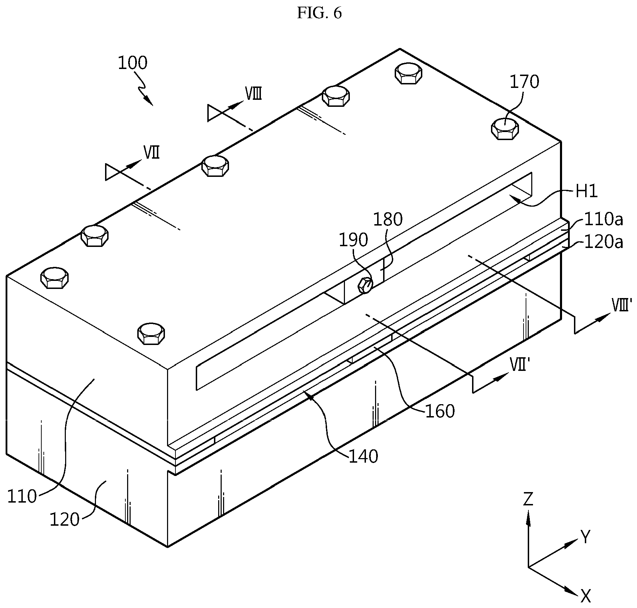

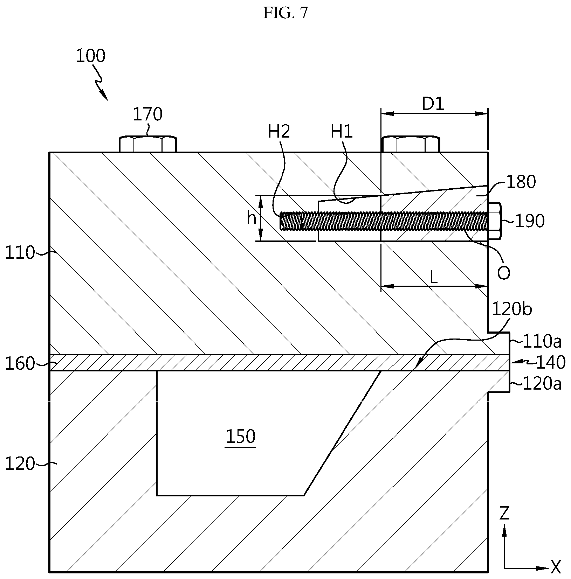

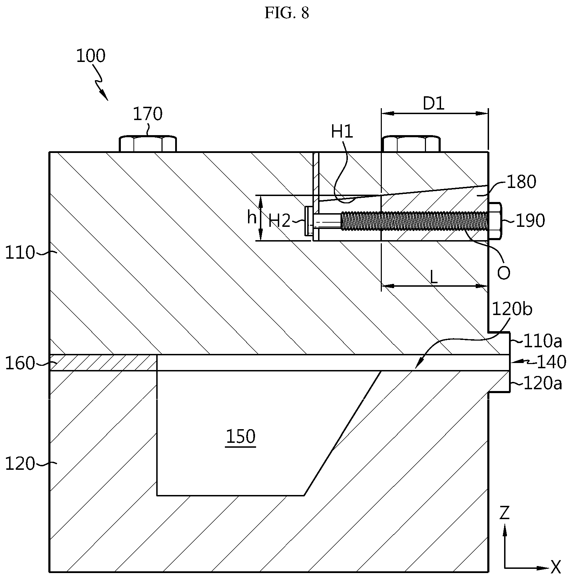

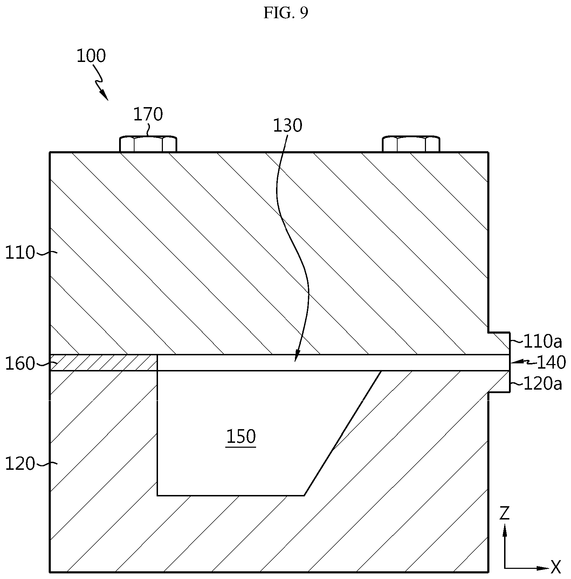

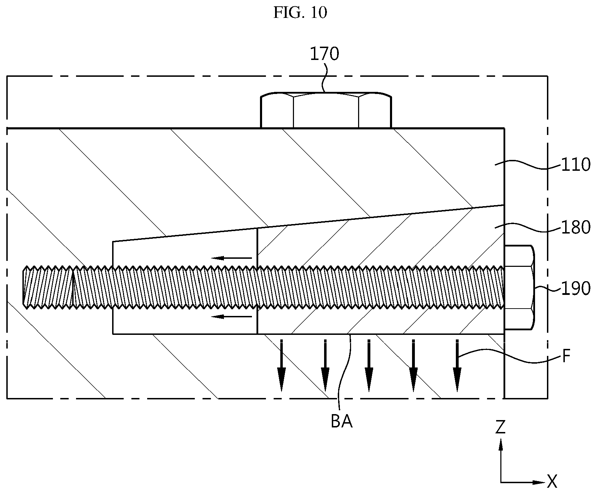

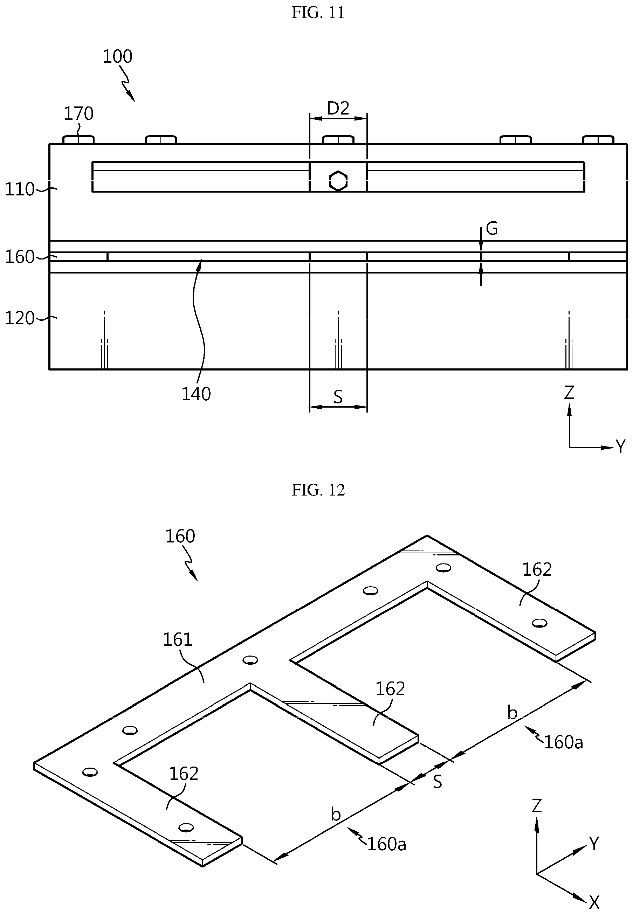

FIG. 6 is a perspective view showing a slot die coater according to an embodiment of the present disclosure. FIG. 7 is a cross-sectional view perpendicular to the width direction of the slot die coater shown in FIG. 6, corresponds to the cross-section taken along line VII-VII' of FIG. 6, and shows a cross-section parallel to the direction of the discharge port. FIG. 8 is a view showing a modified example of the slot die coater shown in FIG. 7. FIG. 9 is another cross-sectional view perpendicular to the width direction of the slot die coater shown in FIG. 6, corresponds to the cross-section taken along line VIII-VIII' of FIG. 6, and also shows a cross-section parallel to the direction of the discharge port. FIG. 10 is a partially enlarged view of FIG. 7, and FIG. 11 is a front view of the slot die coater shown in FIG. 6.

As previously shown in FIG. 1, the conventional slot die coater 1 is composed of two die blocks 10, 20 and a shim 60, whereas the slot die coater 100 of the present disclosure, as shown in FIGS. 6 to 11, includes an upper plate 110 (structure change), a lower plate 120, a shim 160, a taper block 180, and a pressure bolt 190.

The slot die coater 100 of the present disclosure is a device having a slot 130 and coating a coating liquid on a substrate through the slot 130. In the following description, the 'substrate' is a current collector, and the 'coating liquid' is an active material slurry. However, the scope of the present disclosure is not necessarily limited thereto. For example, the substrate may be a porous support constituting a separator, and the coating liquid may be an organic material. That is, the substrate and the coating liquid may be of any kind as long as thin film coating is required. In this specification, 'front' may indicate the direction (X-axis direction) in which the discharge port faces, and 'rear' may indicate the opposite direction. 'Left/right' is a direction perpendicular to the direction in which the discharge port faces and may indicate the width direction (Y-axis direction) of the slot.

Referring to FIGS. 6 to 11, the slot die coater 100 according to an embodiment of the present disclosure is a slot die coater having a slot 130 for discharging a coating liquid, and includes an upper plate 110 and a lower plate 120. For example, if the slot die coater 100 is installed so that the X-axis direction, which is the direction of the discharge port 140, becomes a direction opposite to gravity, it can be implemented as a vertical die that discharges the coating liquid in a direction opposite to gravity, as intended.

The upper plate 110 and the lower plate 120 are assembled with each other to form the discharge port 140 communicating with the slot 130. The upper plate 110/lower plate 120 may be assembled with fixing bolts 170.

The upper plate 110 forms the slot 130 between the lower plate 120 and it. The shim 160 is interposed between the lower plate 120 and the upper plate 110 to form the slot 130 communicating with the discharge port 140.

The upper plate 110 and the lower plate 120 are rectangular members having a width in the Y-axis direction perpendicular to the X-axis direction longer than a length in the X-axis direction, which is the front where the discharge port 140 faces. The shim 160 is in contact with the contact surface of the upper plate 110 and the lower plate 120, and may be assembled between the upper plate 110 and the lower plate 120 by a fixing bolt 170 that fastens the upper plate 110 and the lower plate 120.

The slot 130 is formed between where the upper plate 110 and the lower plate 120 face each other. Here, the shim 160 is interposed and a gap is provided therebetween, thereby forming the slot 130 corresponding to a passage through which the coating liquid may flow. The thickness of the shim 160 determines the vertical width (Z-axis direction, slot gap) of the slot 130.

The upper plate 110 and the lower plate 120 may be made so that most of the surfaces thereof are substantially vertical. In the upper plate 110 and the lower plate 120, the edges formed by the faces are formed at right angles, so that there is a right angle portion in the cross-section, and since the vertical or horizontal plane may be used as a reference plane, manufacturing or handling is easy and precision is guaranteed. Also, when the upper plate 110 and the lower plate 120 are combined, the facing portions may be supported by each other with a high degree of surface contact, and thus fastening fixing and retention are very excellent. In addition, the combination of the upper plate 110 and the lower plate 120 generally has a substantially rectangular parallelepiped shape, and only the front portion where the coating liquid is discharged may have an oblique shape toward the substrate.

The upper plate 110 and the lower plate 120 are made of, for example, SUS. Materials that are easy to process, such as SUS420J2, SUS630, SUS440C, SUS304, and SUS316L may be used. SUS is advantageous in that it is easy to process, is inexpensive, has high corrosion resistance, and may be manufactured into a desired shape at low cost.

In general, since liquid leakage easily occurs on the coupling surface of the SUS assembly, leakage is suppressed by placing rubber rings or other soft materials between the components and then sealing them. However, this sealing method is not suitable for controlling a uniform assembly shape (for example, assembly deviation of less than 10 µm), thereby making it difficult to apply to the slot die coater 100. For this reason, the slot die coater 100 is assembled by fastening the upper plate 110 and the lower plate 120 processed with very high precision (straightness, flatness ±5 µm) with fixing bolts 170. Since it is necessary to prevent liquid leakage, it is preferable that the fastening of the fixing bolt 170 is made at a high pressure of about 200 to 350 N.

The upper plate 110 has a groove H1 recessed into the upper plate 110 parallel with the shim 160 above the slot 130. The taper block 180 and the pressure bolt 190 are configured to fit into the groove H1 and apply pressing force to the shim 160.

As such, in the present disclosure, a groove H1 into which the taper block 180 may be fitted is processed in the upper plate 110. The groove H1 is formed on the discharge port 140 side. In other words, the groove H1 is formed on the front surface of the upper plate 110. The groove H1 is recessed from the front surface of the upper plate 110 toward the rear surface, that is, into the upper plate 110.

The groove H1 may correspond to where a portion of the upper plate 110 is depressed or the upper plate 110 is dug out. It is preferable that the groove H1 is as necessary, but as minimal as possible so as not to impair the mechanical strength of the upper plate 110. As shown, the groove H1 may or may not have an elongated shape in the width direction.

Also, referring to FIGS. 7 and 8, a bolt groove H2 for fixing and pressing the upper plate 110 is processed. The bolt groove H2 may be formed such that the pressure bolt 190 is fastened to a position aligned with the groove H1. The pressure bolt 190 is fastened to the taper block 180 on the front surface of the upper plate 110. The operation of the pressure bolt 190 is performed on the front surface of the upper plate 110.

In addition, the taper block 180 and the pressure bolt 190 are positioned to press the shim 160 at a portion of the shim 160 other than the left and right sides. The pressure bolt 190 serves to press the shim 160 by fixing the position of the taper block 180 in the groove H1 and simultaneously generating a pressing force according to the height difference between the taper block 180 and the groove H1.

The pressing force may be adjusted by adjusting the position of the taper block 180 with the degree of tightening of the pressure bolt 190. The position of the taper block 180 is changed by the pressure bolt 190. In particular, the taper block 180 is fastened to the pressure bolt 190 to enable to move back and forth in a direction parallel to the direction of the discharge port. A hole O is formed in the taper block 180 to be aligned with the bolt groove H2 so that the pressure bolt 190 may pass therethrough.

In FIG. 7, the bolt groove H2 is formed to have a size similar to the diameter of the pressure bolt 190 and is threaded so that the pressure bolt 190 may be fastened. The bolt groove H2 is formed further inward than the groove H1, and the end of the pressure bolt 190 may be fastened. The pressure bolt 190 has a screw thread formed even at the end thereof.

FIG. 8 is another example, wherein the pressure bolt 190 is threaded only to a certain length and has a smooth end. To prevent the end of the pressure bolt 190 from spinning in vain in the bolt groove H2, a latch having a U-shaped through hole fitted across the bolt groove H2 may be further included. Since the bolt groove H2 is formed widely at the rear end of the latch, the stress at the end of the pressure bolt 190 may be relieved.

The lower plate 120 may include a manifold 150 for accommodating the coating liquid. The manifold 150 may have a predetermined shape and depth. Although not shown in the drawing, the manifold 150 is connected to an externally installed coating liquid supply chamber (not shown) through a supply pipe to receive the coating liquid. When the manifold 150 is filled with the coating liquid, the coating liquid is induced to flow along the slot 130 and is discharged to the outside through the discharge port 140.

The manifold 150 is formed to uniformly supply/discharge a coating liquid such as an active material slurry onto a substrate such as a current collector. The manifold 150 may be provided on the upper plate 110.

In the drawings, reference numerals 110a and 120a refer to die lips, which are front ends of the upper plate 110 and the lower plate 120.

As shown in detail in FIGS. 7 and 10, the height h of the groove H1 into which the taper block 180 may be fitted is gradually lowered toward the inside of the groove H1, that is, from the front surface of the upper plate 110 to the rear surface. Also, the inclination of the taper block 180 may be adjusted accordingly. In other words, the groove H1 may be formed to have a lower height h as it goes into the upper plate 110, and the taper block 180 may also be formed in the same way.

The taper block 180 is designed to be moved in the front-rear direction by the pressure bolt 190 within the groove H1. For example, the taper block 180 may have a flat lower surface and an inclined upper surface, as shown. Correspondingly, the groove H1 may be formed to have a flat lower surface and an inclined upper surface, so that the height h may be gradually lowered toward the inside of the groove H1.

By flattening the lower surface of the groove H1, the groove H1 may be made parallel to the shim 160. By flattening the lower surface of the taper block 180, an even force may be applied in the direction of the shim 160. Even if both the upper and lower surfaces of the groove H1 and the taper block 180 are inclined, the height h may be gradually lowered from the front surface to the rear surface of the upper plate 110, but by flattening the lower surface, it becomes a reference surface for processing or operation, and the groove H1 and the taper block 180 may be processed with very high precision (straightness, flatness ±5 µm).

The pressure bolt 190 may be fastened to the upper plate 110 by passing through the taper block 180 from the front side of the groove H1. That is, the operation of the pressure bolt 190 may be performed on the front surface of the upper plate 110.

As the pressure bolt 190 of the taper block 180 is tightened, that is, as the taper block 180 moves toward the inside of the groove H1 in the direction of the small arrow in FIG. 10, a force F indicated by the bold arrow in a vertical direction is applied to the corresponding point. The height h is gradually lowered as the groove H1 moves inward, and the more the taper block 180 is pushed into it, the higher the height difference between the groove H1 and the taper block 180 occurs, which is equivalent to pushing a large object into a small gap, thereby creating a pushing force in all directions. In this way, among the forces that the taper block 180 pushes in all directions to spread the groove H1 in all directions, the force F in the direction of pressing the shim 160 is particularly used. This force F provides a tightening between the upper plate 110, the shim 160, and the lower plate 120. Due to the lower surface area BA of the taper block 180, the shim 160 may be tightened evenly. Even when the pressure inside the slot die coater 100 is increased by discharging the coating liquid, the force F that the taper block 180 exerts on the shim 160 is applied, which prevents deformation of the upper plate 110 and the lower plate 120, thereby preventing discharge of the active material slurry onto the uncoated portion.

Referring to FIGS. 7 and 8, the length D1 of the taper block 180 should be shorter than the length L of the land 120b. The land 120b refers to an area from the front end of the manifold 150 to the discharge port 140. If the length D1 of the taper block 180 is longer than the length L of the land 120b, it may affect the portion of the manifold 150.

In addition, referring to FIG. 11, the horizontal length D2 of the taper block 180 should not be greater than the length S of the shim 160 in the width direction. When the horizontal length D2 of the taper block 180 is greater than the length S of the shim 160, the slot gap G may be affected. As such, the taper block 180 also acts on the center portion of the upper plate 110, and the taper block 180 does not extend so long as to affect the discharge port 140 in the width direction. The taper block 180 is designed to act only on the portion of the shim 160 below it. The taper block 180 does not change the slot gap G.

FIG. 12 is a perspective view showing an example of a shim that may be included in the slot die coater shown in FIG. 6.

Referring to FIGS. 6 and 12 together, the shim 160 may also function as a gasket that prevents the coating liquid from leaking through the gap between the upper plate 110 and the lower plate 120, except for the area where the discharge port 140 is formed, thereby preferably being made of a material having sealing properties. The shim 160 may be made of, for example, plastic or metal, but the present disclosure is not limited thereto. The shim 160 may be, for example, a resin sheet such as Teflon or polyester, or a metal sheet such as copper or aluminum.

The shim 160 may be an integral structure with no seam. The shim 160 may have a flat upper surface and a flat lower surface. That is, it may be a sheet-like member.

The shim 160 may be interposed in the remaining portion of the edge areas of the opposite surfaces of the upper plate 110 and the lower plate 120 except for one side. Accordingly, the discharge port 140 through which the coating liquid may be discharged to the outside is formed between the die lips 110a, 120a. The discharge port 140 can be said to be a place formed by the separation between the die lips 110a, 120a, and the end of the slot 130 becomes the discharge port 140. The shim 160 has a plurality of openings 160a by intermittently cutting one area to determine the coating width of the coating layer applied to the substrate. The opening 160a defines the slot 130, and the end of the slot 130 becomes the discharge port 140. When the number of openings 160a is one, one coating layer may be formed, and when the number of openings 160a is two as shown, two coating layers may be formed side by side along the Y-axis direction.

For example, the shim 160 may include a plurality of extensions 162 vertically connected to the base portion 161 to include a plurality of openings 160a and extending toward the discharge port 140. In order to form a plurality of active material layers with a coating width of b on the substrate and to form uncoated portions on both sides of each active material layer, the opening 160a of the shim 160 is designed to have a width of b. When the shim 160 as shown in FIG. 12 is applied, a coating layer having a stripe pattern shape is formed on the substrate.

As described with reference to FIG. 11, the taper block 180 may be provided at a position corresponding to the extension 162 excluding the extensions on the side among the plurality of extensions 162. In particular, the horizontal length D2 of the taper block 180 is not greater than the length S of the extension 162 of the shim 160, particularly, the extension 162 located at the center, and the taper block 180 is fitted into the groove H1 at a position corresponding to such an extension 162 and may press the extension 162 at that location. In addition, by adjusting the length D1 of the taper block 180, the taper block 180 may press the land 120b without affecting the manifold 150. Since the taper block 180 has a size that does not intrude into the openings 160a on both sides of the extension 162 at a location corresponding to the extension 162, the taper block 180 and the pressure bolt 190 may press the shim 160 without affecting the opening 160a. By pressing the shim 160, it is possible to prevent the gap between the upper plate 110 and the lower plate 120 from widening.

The shim 160 is positioned below the taper block 180. Since the shim 160 supports the upper plate 110, even the operation of the taper block 180 does not affect the opening 160a, and accordingly, there is no deformation of the slot gap G. That is, even if the taper block 180 is operated, there is no change in the flow rate of the coating liquid through the discharge port 140. The present disclosure is not intended to change the slot gap G and does not affect the slot gap G.

Conventionally, when the internal pressure of the slot die coater 1 increases, there is a problem that the die lips 10a, 20a are widened (see FIGS. 1 to 5). However, according to the present disclosure, the taper block 180 tightens between the upper plate 110, the shim 160, and the lower plate 120, so that the die lips 110a, 120a do not spread apart. Furthermore, the active material slurry does not permeate even to a portion where the active material slurry should be blocked and prevented from being discharged. Therefore, the electrode active material layer pattern may be formed without surface defects caused by the active material slurry scattered on the uncoated portion.

At the rear and front of the manifold 150, the lower surface of the upper plate 110 and the upper surface of the shim 160 may be coupled to each other without a gap, and the upper surface of the lower plate 120 and the lower surface of the shim 160 may be coupled to each other without a gap. In particular, the widening of the gap between the upper plate 110 and the lower plate 120 may be prevented by further pressing between the upper plate 110, the shim 160, and the lower plate 120 through the taper block 180 and the pressure bolt 190. Through this, the coating liquid flows reliably only within the slot 130 defined by the shim 160 and does not intrude into the uncoated portion.

According to the slot die coater 100 with this configuration, a coating roll (not shown) provided to be rotatable may be disposed in front of the slot die coater 100, and while moving the substrate to be coated by rotating the coating roll, the coating liquid may be discharged and continuously in contact with the surface of the substrate to be applied. Alternatively, the pattern coating may be intermittently formed on the substrate by alternately supplying and stopping the coating liquid. Since the coating liquid does not intrude into the uncoated portion, the coating layer may be formed without pattern defects.

For example, by coating the positive electrode active material slurry using the slot die coater 100 of the present disclosure, it may be applied to manufacturing a positive electrode of a secondary battery. The positive electrode includes a current collector and a positive electrode active material layer formed on a surface of the current collector. The current collector exhibits electrical conductivity, such as Al, Cu, or the like, and may be used appropriately according to the polarity of the electrode known in the field of secondary batteries. The positive electrode active material layer may further include at least one of a plurality of positive electrode active material particles, a conductive material, and a binder. In addition, the positive electrode may further include various additives for the purpose of supplementing or improving electrochemical properties.

The active material is not limited to a specific component as long as it can be used as a positive electrode active material of a lithium-ion secondary battery. Non-limiting examples thereof may include any one selected from: layered compounds such as lithium manganese composite oxides (LiMn₂O₄, LiMnO₂, and the like), lithium cobalt oxide (LiCoO₂), and lithium nickel oxide (LiNiO₂), or compounds substituted with one or more transition metals; lithium manganese oxides with the formula Li₁₊ₓMn₂₋ₓO₄ (where x is 0 to 0.33) such as LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; Ni site-type lithium nickel oxide represented by the formula LiNi₁₋ₓMₓO₂ (where M is Co, Mn, Al, Cu, Fe, Mg, B, or Ga, and x is 0.01 to 0.3); lithium manganese composite oxide represented by the formula LiMn₂₋ₓMₓO₂ (where M is Co, Ni, Fe, Cr, Zn, or Ta, and x is 0.01 to 0.1) or Li₂Mn₃MO₈ (where M is Fe, Co, Ni, Cu, or Zn); LiMn₂O₄ in which Li part of the formula is substituted with an alkaline earth metal ion; disulfide compounds; and Fe₂(MoO₄)₃; or a mixture of two or more of them. In the present disclosure, the positive electrode may include at least one of a polymer-based solid electrolyte, an oxide-based solid electrolyte, and a sulfide-based solid electrolyte as a solid electrolyte material.

The conductive material may be typically added in an amount of 1 wt% to 20 wt% based on the total weight of the mixture including the active material. Such a conductive material is not particularly limited as long as it has conductivity without causing chemical change in the corresponding battery, and particular examples thereof may include any one selected from: graphite such as natural graphite or artificial graphite; carbon black such as acetylene black, ketjen black, channel black, furnace black, lamp black, and summer black; conductive fibers such as carbon fibers or metal fibers; carbon fluoride; metal powders such as aluminum, and nickel powder; conductive whiskers such as zinc oxide and potassium titanate; conductive metal oxides such as titanium oxide; and conductive materials such as polyphenylene derivatives; or a mixture of two or more of them.

The binder is not particularly limited as long as it is a component that aids in the binding of the active material and the conductive material and the binding to the current collector, and particular examples thereof may include polyvinylidene fluoride polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylenepropylene-diene monomer (EPDM), sulfonated EPDM, styrene butadiene rubber, fluoro rubber, various copolymers, and the like. The binder may be typically included in the range of 1 wt% to 30 wt%, or 1 wt% to 10 wt% based on 100wt% of the electrode layer.

By coating the negative electrode active material slurry using the slot die coater 100 of the present disclosure, it may be applied to manufacturing a negative electrode of a secondary battery. The negative electrode includes a current collector and a negative active material layer formed on a surface of the current collector. The negative electrode active material layer may further include at least one of a plurality of negative electrode active material particles, a conductive material, and a binder. In addition, the negative electrode may further include various additives for the purpose of supplementing or improving electrochemical properties.

As for the negative electrode active material, a carbon material such as graphite, amorphous carbon, diamond-like carbon, fullerene, carbon nanotube, and carbon nanohorn; a lithium metal material; an alloy material such as silicon or tin; an oxide material such as Nb₂O₅, Li₅Ti₄O₁₂ and TiO₂; or a combination of them may be used. For the negative electrode, the conductive material, the binder, and the current collector may refer to the contents described for the positive electrode.

The active material slurry containing the positive electrode active material or the negative electrode active material has a very high viscosity. For example, the viscosity may be 1000 cps or more (1 Pa s = 1000 cps).

The viscosity of the active material slurry for use in forming a secondary battery electrode may be 2000 cps to 30000 cps. For example, the negative electrode active material slurry may have a viscosity of 2000 cps to 4000 cps. The positive electrode active material slurry may have a viscosity of 8000 cps to 30000 cps. Since it is necessary to be able to coat a coating liquid having a viscosity of 1200 cps or more, the slot die coater 100 of the present disclosure is different from the device structure for applying a coating liquid having a lower viscosity than this, for example, ordinary resin liquids, such as a photographic sensitizing emulsion liquid, a magnetic liquid, a liquid imparting antireflection or antiglare properties, a liquid imparting a viewing angle enlargement effect, a pigment liquid for a color filter, and the like, and is not a device that can be reached by changing it. The slot die coater 100 of the present disclosure is for applying an active material slurry that may contain an active material having an average particle size of, for example, about 10 µm, so that it is different from the device structure for applying other coating liquids that do not contain particles of this size and is not a device that can be reached by changing it. The slot die coater 100 of the present disclosure is optimized as a coater for electrode manufacturing.

When a coating liquid such as an active material slurry having a high viscosity is discharged, a force may be applied around the discharge port 140 even by the discharge pressure. Conventionally, due to the deformation of the die blocks 10, 20, the active material slurry penetrates into the die blocks 10, 20 other than the shim 60, resulting in a problem of pattern defects (see FIGS. 1 to 5). According to the present disclosure, since the taper block 180 and the pressure bolt 190 are provided, deformation of the upper plate 110 and the lower plate 120 is prevented, and thus a coating liquid such as an active material slurry may not penetrate the inside of the slot die coater 100 beyond a width defined by the shim 160, such as 'b' in FIG. 12. Therefore, a good active material layer may be formed without pattern defects.

According to the present disclosure, the coating liquid does not invade unnecessary areas inside the slot die coater 100. Therefore, there is no concern that the active material slurry is scattered and coated on the uncoated portion to cause boundary contamination or to cause boundary unevenness such as wavy patterns on the boundary surface. The coating interface formed in the MD direction should be formed uniformly so that slitting defects do not occur when electrodes are formed with each active material layer by slitting along the uncoated portion later, and thus there is no occurrence of electrode disconnection after the secondary battery is manufactured due to contamination happening to remain on the uncoated portion. When the slot die coater 100 according to the present disclosure is used, slitting defects or electrode disconnection do not occur.

According to the present disclosure, the structure of the upper plate 110 is changed compared to the prior art, and the taper block 180 and the pressure bolt 190 are further included. The taper block 180 and the pressure bolt 190 tightly press the upper plate 110, the shim 160, and the lower plate 120, so that the upper plate 110, the shim 160, and the lower plate 120 are in contact with each other on their faces, and it is difficult to create an empty space between them. Accordingly, even if torque is generated due to the internal pressure of the slot die coater 100, the surface where the upper plate 110 and the lower plate 120 are in contact with each other with the shim 160 therebetween may be supported. In other words, it is possible to prevent the slot 130 from widening. When the gap between the upper plate 110 and the lower plate 120 is widened and the active material slurry flows in, the problem of surface defects caused by intermittent scattering of the active material slurry on the uncoated portion will occur, but in the slot die coater 100 according to the present disclosure, the gap between the upper plate 110 and the lower plate 120 does not widen, thereby making it possible to form electrodes without surface defects.

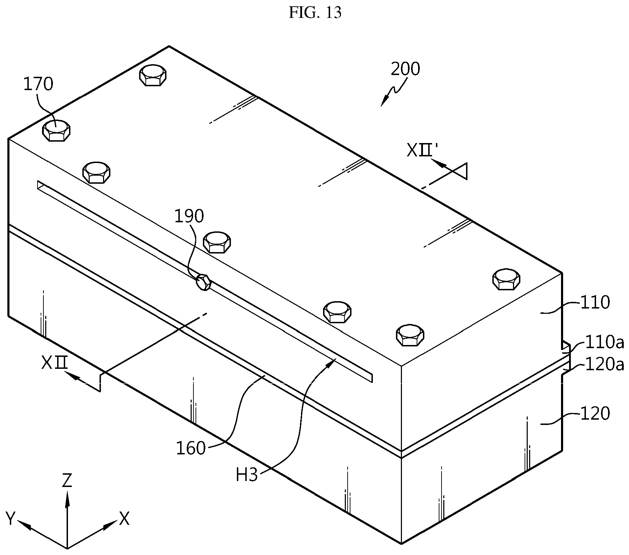

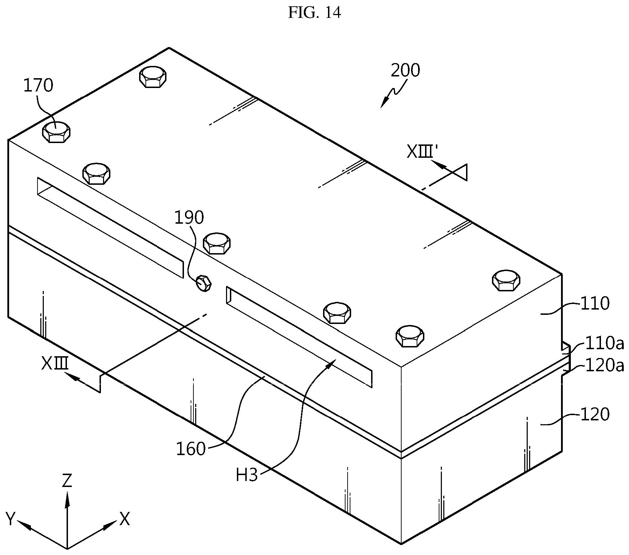

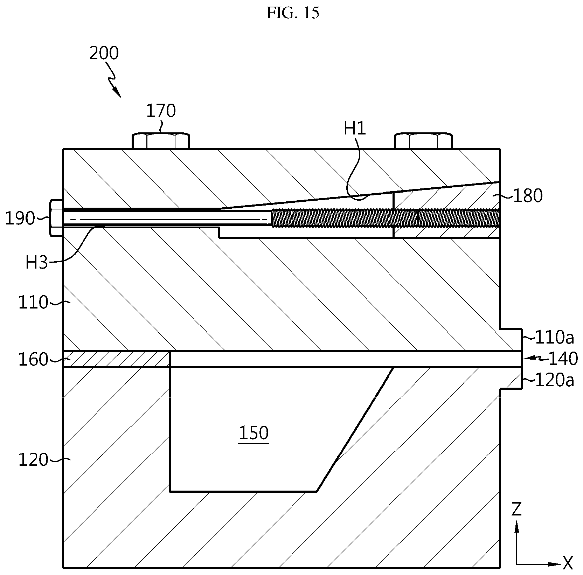

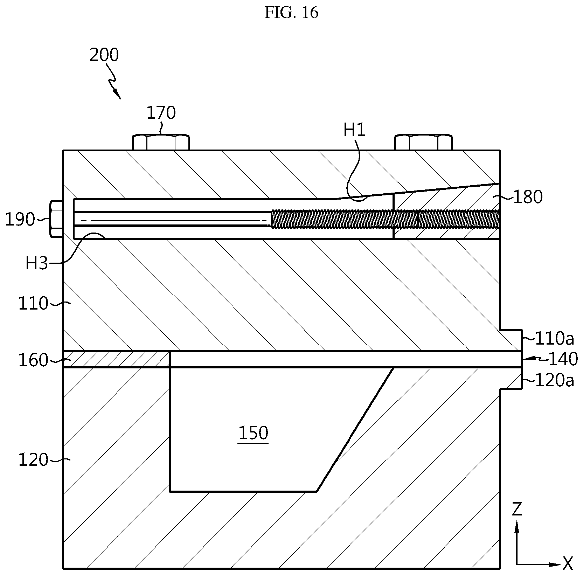

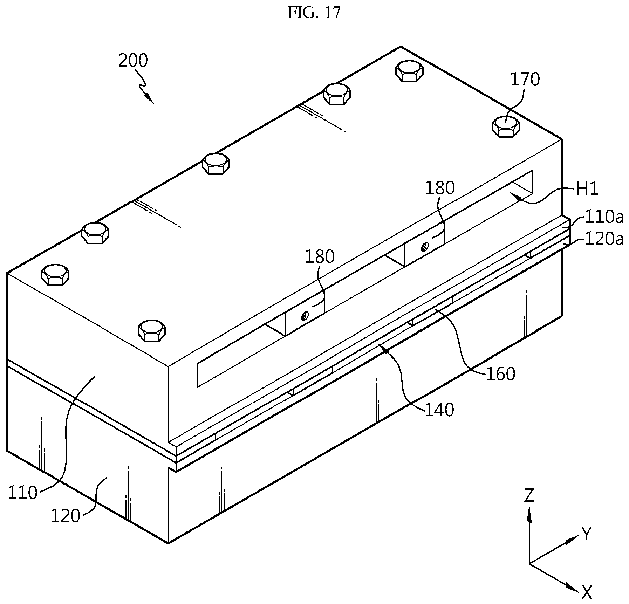

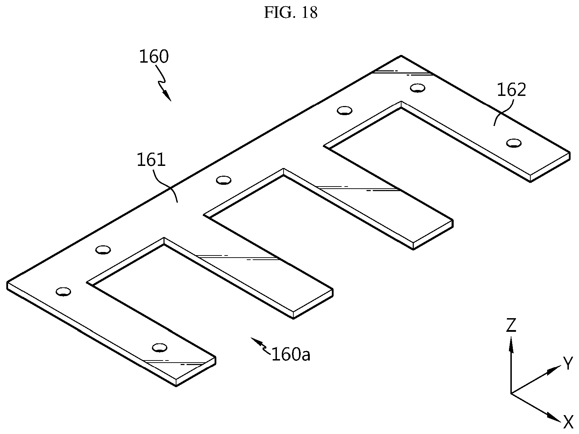

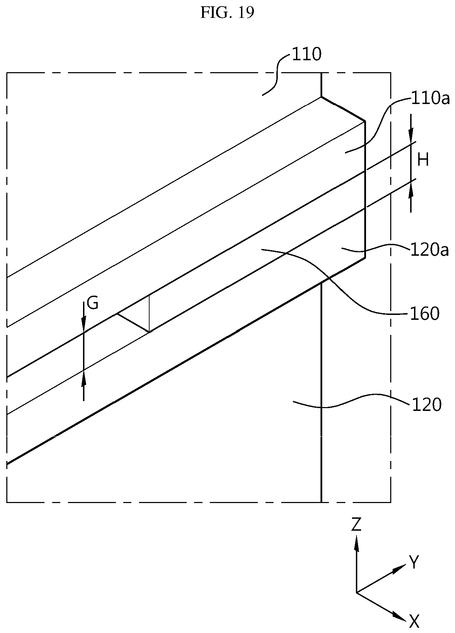

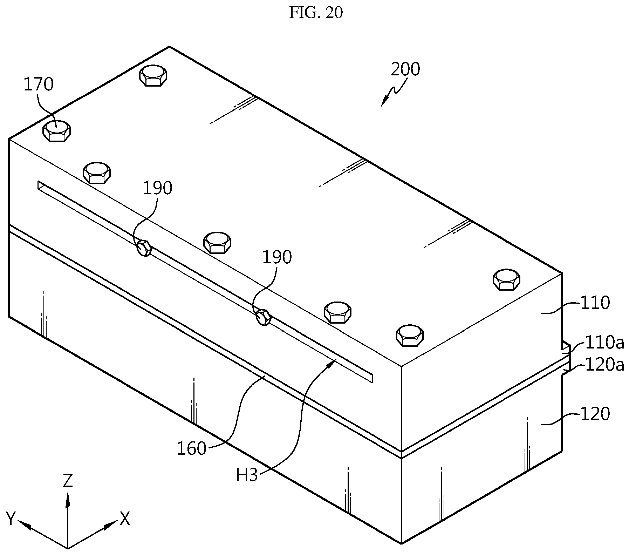

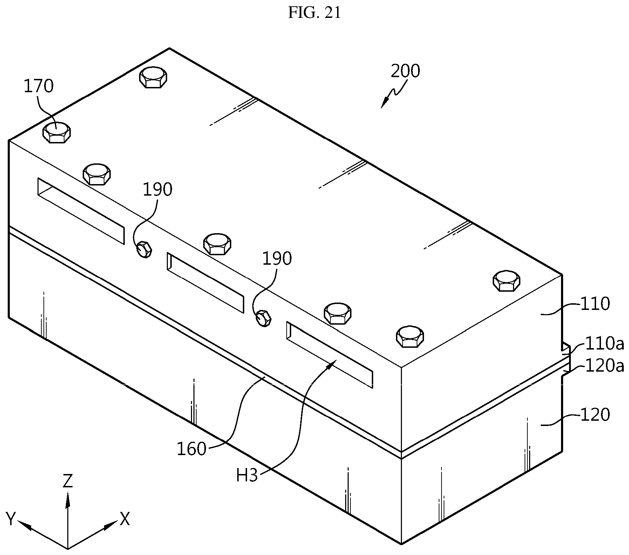

FIG. 13 is a perspective view showing a slot die coater according to another embodiment of the present disclosure, and FIG. 14 is a view of a modified example. FIGS. 15 and 16 are cross-sectional views perpendicular to the width direction of the slot die coater shown in FIGS. 13 and 14, respectively, and correspond to the cross-sections taken along lines XII-XII' of FIG. 13 and XIII-XIII' of FIG. 14, respectively. FIG. 17 is a perspective view of a modified example of the slot die coater shown in FIG. 13 in another direction, and shows a front side of the slot die coater. FIG. 18 is a perspective view showing an example of a shim that may be included in the slot die coater shown in FIG. 13. FIG. 19 is a partially enlarged view of FIG. 17. FIG. 20 is a perspective view of the slot die coater shown in FIG. 17 in another direction, and shows a rear side of the slot die coater. FIG. 21 is a modified example of FIG. 20.

A slot die coater according to another embodiment of the present disclosure will be described with reference to the above drawings.

Compared to the slot die coater 100 described above, the slot die coater 200 according to another embodiment of the present disclosure does not have a bolt groove H2 for fixing and pressing the taper block 180 on the upper plate 110, and a residual hole H3 is processed in the width direction at that position.

The residual hole H3 is formed to be long in the width direction at the rear surface of the upper plate 110 so that the pressure bolt 190 may be inserted.

The pressure bolt 190 extends through the upper plate 110 from the rear surface of the upper plate 110 and is fastened to the taper block 180. That is, the pressure bolt 190 is inserted from the rear portion of the upper plate 110 and goes all the way into the taper block 180. To this end, a thread through which the pressure bolt 190 may be fastened is processed within the taper block 180. What is different from the previous embodiment is that the pressure bolt 190 is fastened to the taper block 180 at the rear surface of the upper plate 110. The pressure bolt 190 is operated from the rear surface of the upper plate 110. Since the pressure bolt 190 is operated from the rear portion, rather than the front portion where the coating liquid is discharged, it is easier to manage work, maintenance, and the like.

Since the residual hole H3 is formed long in the width direction, pressure bolts 190 may be added corresponding to the number of patterns to be formed, and taper blocks 180 may be added in a corresponding number to the grooves H1 formed on the front surface of the upper plate 110. That is, they may be configured separately for each pattern.

In particular, referring to FIGS. 13 and 15, the residual hole H3 is formed to have a size similar to the diameter of the pressure bolt 190. The pressure bolt 190 is smooth and has a thread formed at its end. The cross-sectional shape of the residual hole H3 and the shape of the pressure bolt 190 may be varied from those illustrated. The residual hole H3 is formed to be long in the width direction on the rear surface of the upper plate 110. It is an easy structure by placing the pressure bolt 190 at any position in the residual hole H3.

Referring to FIGS. 14 and 16, which are modified examples, the residual hole H3 is formed to be larger than the diameter of the pressure bolt 190. In order to prevent the pressure bolt 190 from spinning in vain in the residual hole H3, the front middle of the residual hole H3 and the rear of the upper plate 110 are blocked to act as a latch. Since the residual hole H3 is formed wider than that of the previous embodiment, the fastening stress caused by the pressure bolt 190 is not applied to the upper plate 110.

Meanwhile, in FIGS. 17, 20, and 21, the case in which there are two taper blocks 180 is shown in detail as an example. A shim 160 that can be used in this case is shown in FIG. 18.

Referring to FIG. 18, the shim 160 may include four extensions 162 vertically connected to the base portion 161 to include three openings 160a and extending toward the discharge port 140. The taper block 180 is provided to correspond to the remaining two extensions 162 except for the left and right sides among the four extensions 162.

As such, according to another embodiment of the present disclosure, the number of taper blocks 180 may be increased and the position thereof may be changed to correspond to the position of the shim 160. Therefore, the pressure bolt 190 and the taper block 180 may be provided in plurality along the width direction. In addition, when the shape of the shim 160 changes, the positions of the taper block 180 and the pressure bolt 190 may be changed to a desired location in the width direction.

As shown in FIG. 19, the taper block 180 and the pressure bolt 190 do not affect the slot gap G, so the slot gap G may be maintained to correspond to a set thickness H of the shim 160. That is, in the present disclosure, the size of the slot gap G is adjusted by the thickness H of the shim 160, and the taper block 180 and the pressure bolt 190 press the shim 160 without affecting the slot gap G, thereby preventing the gap between the upper plate 110 and the lower plate 120 from widening.

The taper block 180 may be provided in plurality in the width direction. When the taper block 180 is provided in plurality and the spacing between them is adjusted to be constant, a more even force may be transmitted and deformation of the upper plate 110 and lower plate 120 may be prevented with a stable balance.

Through the taper block 180 and the pressure bolt 190, the die lips 110a, 120a do not spread apart. Therefore, the active material slurry does not permeate into portions where the active material slurry is blocked by the shim 160 and is prevented from being discharged.

Meanwhile, in the previous embodiments, the slot die coaters 100, 200 were described as an example of a vertical die type that discharges the active material slurry, which is a coating liquid, in a direction opposite to gravity, but the present disclosure may also be applied to the case where the direction of the discharge port 140 is installed almost horizontally to be configured as a horizontal die type (almost: ± 5 degrees). In addition, the slot die coaters 100, 200 have been described as having a single-layer slot 130 between the upper plate 110 and the lower plate 120, but the present disclosure may be implemented in a dual slot die coater with two layers of slots including an upper plate, a middle plate, and a lower plate.

### [Explanation of reference signs]

| | | | |
|---|---|---|---|
| 100, 200: | slot die coater | 110: | upper plate |
| 110a, 120a: | die lip | 120: | lower plate |
| 120b: | land | 130: | slot |
| 140: | discharge port | 150: | manifold |
| 160: | shim | 170: | fixing bolt |
| 180: | taper block | 190: | pressure bolt |

## Claims

1. A slot die coater (100, 200) comprising:
an upper plate (110) and a lower plate (120) assembled with each other to form a discharge port (140); and
a shim (160) interposed between the lower plate (120) and the upper plate (110) to form a slot (130) communicating with the discharge port (140),
wherein the upper plate (110) has a groove recessed into the upper plate (110) parallel with the shim (160) above the slot (130), and
further comprises a taper block (180) and a pressure bolt (190) configured to fit into the groove and apply pressing force to the shim (160), **characterized in that**
a height of the groove is gradually lowered toward the inside of the groove, for adjustment of an inclination of the taper block (180).

2. The slot die coater (100, 200) according to claim 1, wherein the pressure bolt (190) extends through the taper block (180) from the front side of the groove and is fastened to the upper plate (110).

3. The slot die coater (100, 200) according to claim 1, wherein the groove is recessed from the front surface of the upper plate (110) toward the rear surface, and the pressure bolt (190) is fastened to the taper block (180) at the front surface of the upper plate (110).

4. The slot die coater (100, 200) according to claim 1, wherein the taper block (180) is fastened to the pressure bolt (190) to move back and forth in a direction parallel to the direction of the discharge port (140), and generates a force due to a height difference between the groove and the taper block (180) to press the shim (160).

5. The slot die coater (100, 200) according to claim 1, wherein the shim (160) comprises a plurality of extensions vertically connected to the base portion and extending toward the discharge port (140) to comprise a plurality of openings, wherein the horizontal length of the taper block (180) is not greater than the horizontal length of the extension, and the taper block (180) is fitted into the groove at a position corresponding to the extension.

6. The slot die coater (100, 200) according to claim 5, wherein the taper block (180) is provided at a position corresponding to an extension excluding the extensions on a side among the plurality of extensions.

7. The slot die coater (100, 200) according to claim 1, which further comprises a manifold (150) in the lower plate (120), wherein the length of the taper block (180) is shorter than the length of a land, which is an area from the front end of the manifold (150) to the discharge port (140).

8. The slot die coater (100, 200) according to claim 1, wherein the groove is formed on the discharge port (140) side.

9. The slot die coater (100, 200) according to claim 1, wherein a bolt groove into which the pressure bolt (190) is fastened is formed at a position aligned with the groove.

10. The slot die coater (100, 200) according to claim 9, wherein a hole is formed by being aligned with the bolt groove in the taper block (180) so that the pressure bolt (190) may pass therethrough.

11. The slot die coater (100, 200) according to claim 1, wherein the pressure bolt (190) extends through the upper plate (110) from the rear surface of the upper plate (110) and is fastened to the taper block (180).

12. The slot die coater (100, 200) according to claim 11, wherein a residual hole is comprised in the width direction in the rear surface of the upper plate (110) so that the pressure bolt (190) may be inserted.

13. The slot die coater (100, 200) according to claim 12, wherein the pressure bolt (190) and the taper block (180) are provided in plurality along the width direction.

14. The slot die coater (100, 200) according to claim 12, wherein a thread to which the pressure bolt (190) may be fastened is formed within the taper block (180).

15. The slot die coater (100, 200) according to claim 12, wherein the residual hole is formed from the rear surface of the upper plate (110) to the front surface, the groove is formed from the front surface of the upper plate (110) to the rear surface, and the residual hole is formed at a position aligned with the groove.

16. The slot die coater (100, 200) according to claim 1, wherein a manifold (150) for accommodating a coating liquid is provided in the lower plate (120), and the manifold (150) communicates with the slot (130).

17. The slot die coater (100, 200) according to claim 16, which discharges and applies the coating liquid onto a substrate through the discharge port (140), wherein the shim (160) has a plurality of openings by intermittently cutting one area thereof to determine the coating width of the coating layer applied on the substrate.

18. The slot die coater (100, 200) according to claim 17, wherein the taper block and the pressure bolt press the shim without affecting the opening to prevent the gap between the upper plate and the lower plate from widening.

## Patentansprüche

1. Schlitzdüsen-Beschichter (100, 200), umfassend:
eine obere Platte (110) und eine untere Platte (120), welche miteinander zusammengebaut sind, um eine Abgabeöffnung (140) zu bilden; und
ein Abstandselement (160), welches zwischen der unteren Platte (120) und der oberen Platte (110) eingefügt ist, um eine Ausnehmung (130) zu bilden, welche mit der Abgabeöffnung (140) kommuniziert,
wobei die obere Platte (110) eine Nut aufweist, welche in der oberen Platte (110) parallel zu dem Abstandselement (160) oberhalb der Ausnehmung (130) vertieft ist, und
ferner einen Abschrägungsblock (180) und einen Druckbolzen (190) umfasst,
welche dazu eingerichtet sind, in die Nut zu passen und eine Druckkraft auf das Abstandselement (160) auszuüben, **dadurch gekennzeichnet, dass** eine Höhe der Nut in Richtung der Innenseite der Nut für eine Anpassung einer Neigung des Abschrägungsblocks (180) graduell verringert ist.

2. Schlitzdüsen-Beschichter (100, 200) nach Anspruch 1, wobei sich der Druckbolzen (190) durch den Abschrägungsblock (180) von der Vorderseite der Nut erstreckt und an der oberen Platte (110) befestigt ist.

3. Schlitzdüsen-Beschichter (100, 200) nach Anspruch 1, wobei die Nut von der vorderen Fläche der oberen Platte (110) in Richtung der hinteren Fläche vertieft ist, und der Druckbolzen (190) an den Abschrägungsblock (180) an der vorderen Fläche der oberen Platte (110) befestigt ist.

4. Schlitzdüsen-Beschichter (100, 200) nach Anspruch 1, wobei der Abschrägungsblock (180) an dem Druckbolzen (190) befestigt ist, um sich in einer Richtung parallel zu der Richtung der Abgabeöffnung (140) hin und her zu bewegen, und eine Kraft aufgrund einer Höhendifferenz zwischen der Nut und dem Abschrägungsblock (180) erzeugt, um das Abstandselement (160) zu pressen.

5. Schlitzdüsen-Beschichter (100, 200) nach Anspruch 1, wobei das Abstandselement (160) eine Mehrzahl von Erstreckungen umfasst, welche vertikal mit dem Basisabschnitt verbunden sind und sich in Richtung der Abgabeöffnung (140) erstrecken, um eine Mehrzahl von Öffnungen zu umfassen, wobei die horizontale Länge des Abschrägungsblocks (180) nicht größer als die horizontale Länge der Erstreckung ist und der Abschrägungsblock (180) in die Nut bei einer Position eingepasst ist, welche der Erstreckung entspricht.

6. Schlitzdüsen-Beschichter (100, 200) nach Anspruch 5, wobei der Abschrägungsblock (180) an einer Position bereitgestellt ist, welche einer Erstreckung entspricht, ausgenommen die Erstreckungen an einer Seite unter der Mehrzahl von Erstreckungen.

7. Schlitzdüsen-Beschichter (100, 200) nach Anspruch 1, welcher ferner eine Sammelleitung (150) in der unteren Platte (120) umfasst, wobei die Länge des Abschrägungsblocks (180) kürzer als die Länge eines Stegs ist, welcher eine Fläche von dem vorderen Ende der Sammelleitung (150) zu der Abgabeöffnung (140) ist.

8. Schlitzdüsen-Beschichter (100, 200) nach Anspruch 1, wobei die Nut an der Seite der Abgabeöffnung (140) gebildet ist.

9. Schlitzdüsen-Beschichter (100, 200) nach Anspruch 1, wobei eine Bolzennut, in welcher der Druckbolzen (190) befestigt ist, an einer Position gebildet ist, welche mit der Nut ausgerichtet ist.

10. Schlitzdüsen-Beschichter (100, 200) nach Anspruch 9, wobei ein Loch gebildet ist, indem es mit der Bolzennut in dem Abschrägungsblock (180) ausgerichtet ist, so dass der Druckbolzen (190) dahindurch treten kann.

11. Schlitzdüsen-Beschichter (100, 200) nach Anspruch 1, wobei sich der Druckbolzen (190) durch die obere Platte (110) von der hinteren Fläche der oberen Platte (110) erstreckt und an dem Abschrägungsblock (180) befestigt ist.

12. Schlitzdüsen-Beschichter (100, 200) nach Anspruch 11, wobei ein verbleibendes Loch in der Breitenrichtung in der hinteren Fläche der oberen Platte (110) umfasst ist, so dass der Druckbolzen (190) eingesetzt sein kann.

13. Schlitzdüsen-Beschichter (100, 200) nach Anspruch 12, wobei der Druckbolzen (190) und der Abschrägungsblock (180) in einer Mehrzahl entlang der Breitenrichtung bereitgestellt sind.

14. Schlitzdüsen-Beschichter (100, 200) nach Anspruch 12, wobei ein Faden, an welchem der Druckbolzen (190) befestigt sein kann, innerhalb des Abschrägungsblocks (180) gebildet ist.

15. Schlitzdüsen-Beschichter (100, 200) nach Anspruch 12, wobei das verbleibende Loch von der hinteren Fläche der oberen Platte (110) zu der vorderen Fläche gebildet ist, die Nut von der hinteren Fläche der oberen Platte (110) zu der hinteren Fläche gebildet ist und das verbleibende Loch an einer Position gebildet ist, welche mit der Nut ausgerichtet ist.

16. Schlitzdüsen-Beschichter (100, 200) nach Anspruch 1, wobei eine Sammelleitung (150) zum Aufnehmen einer Beschichtungsflüssigkeit in der unteren Platte (120) bereitgestellt ist und die Sammelleitung (150) mit der Ausnehmung (130) kommuniziert.

17. Schlitzdüsen-Beschichter (100, 200) nach Anspruch 16, welcher die Beschichtungslösung durch die Abgabeöffnung (140) abgibt und auf ein Substrat aufträgt, wobei das Abstandselement (160) eine Mehrzahl von Öffnungen aufweist, indem intermittierend ein Bereich davon geschnitten ist, um die Beschichtungsbreite der Beschichtungslage zu bestimmen, welche auf das Substrat aufgetragen wird.

18. Schlitzdüsen-Beschichter (100, 200) nach Anspruch 17, wobei der Abschrägungsblock und der Druckbolzen das Abstandselement pressen, ohne dass die Öffnung beeinflusst wird, um zu verhindern, dass sich der Abstand zwischen der oberen Platte und der unteren Platte aufweitet.

## Revendications

1. Dispositif d'enduction à filière à fente (100, 200), comprenant :
une plaque supérieure (110) et une plaque inférieure (120) assemblées l'une avec l'autre pour former un orifice d'évacuation (140) ; et
une cale (160) interposée entre la plaque inférieure (120) et la plaque supérieure (110) pour former une fente (130) communiquant avec l'orifice d'évacuation (140),
dans lequel la plaque supérieure (110) présente une rainure en retrait dans la plaque supérieure (110) parallèlement à la cale (160) au-dessus de la fente (130), et
comprend en outre un bloc conique (180) et un boulon de pression (190) configuré pour s'adapter dans la rainure et appliquer une force de pression sur la cale (160),
**caractérisée en ce que**
une hauteur de la rainure est progressivement abaissée vers l'intérieur de la rainure, pour le réglage d'une inclinaison du bloc conique (180).

2. Dispositif d'enduction à filière à fente (100, 200) selon la revendication 1, dans lequel le boulon de pression (190) s'étend à travers le bloc conique (180) à partir du côté avant de la rainure et est fixé à la plaque supérieure (110).

3. Dispositif d'enduction à filière à fente (100, 200) selon la revendication 1, dans lequel la rainure est en retrait de la surface avant de la plaque supérieure (110) vers la surface arrière, et le boulon de pression (190) est fixé au bloc conique (180) au niveau de la surface avant de la plaque supérieure (110).

4. Dispositif d'enduction à filière à fente (100, 200) selon la revendication 1, dans lequel le bloc conique (180) est fixé au boulon de pression (190) pour se déplacer d'avant en arrière dans une direction parallèle à la direction de l'orifice d'évacuation (140), et génère une force due à une différence de hauteur entre la rainure et le bloc conique (180) pour appuyer sur la cale (160).

5. Dispositif d'enduction à filière à fente (100, 200) selon la revendication 1, dans lequel la cale (160) comprend une pluralité d'extensions connectées verticalement à la partie de base et s'étendant vers l'orifice d'évacuation (140) pour comprendre une pluralité d'ouvertures, dans lequel la longueur horizontale du bloc conique (180) n'est pas supérieure à la longueur horizontale de l'extension, et le bloc conique (180) est monté dans la rainure à une position correspondant à l'extension.

6. Dispositif d'enduction à filière à fente (100, 200) selon la revendication 5, dans lequel le bloc conique (180) est prévu à une position correspondant à une extension à l'exclusion des extensions sur un côté parmi la pluralité d'extensions.

7. Dispositif d'enduction à filière à fente (100, 200) selon la revendication 1, qui comprend en outre un collecteur (150) dans la plaque inférieure (120), dans lequel la longueur du bloc conique (180) est plus courte que la longueur d'une zone parallèle, qui est une zone allant de l'extrémité avant du collecteur (150) à l'orifice d'évacuation (140).

8. Dispositif d'enduction à filière à fente (100, 200) selon la revendication 1, dans lequel la rainure est formée du côté de l'orifice d'évacuation (140).

9. Dispositif d'enduction à filière à fente (100, 200) selon la revendication 1, dans lequel une rainure de boulon dans lequel le boulon de pression (190) est fixé est formée à une position alignée avec la rainure.

10. Dispositif d'enduction à filière à fente (100, 200) selon la revendication 9, dans lequel un trou est formé en étant aligné avec la rainure de boulon dans le bloc conique (180) de sorte que le boulon de pression (190) puisse le traverser.

11. Dispositif d'enduction à filière à fente (100, 200) selon la revendication 1, dans lequel le boulon de pression (190) s'étend à travers la plaque supérieure (110) à partir de la surface arrière de la plaque supérieure (110) et est fixé au bloc conique (180).

12. Dispositif d'enduction à filière à fente (100, 200) selon la revendication 11, dans lequel un trou résiduel est compris dans la direction de largeur dans la surface arrière de la plaque supérieure (110) de sorte que le boulon de pression (190) puisse être inséré.

13. Dispositif d'enduction à filière à fente (100, 200) selon la revendication 12, dans lequel le boulon de pression (190) et le bloc conique (180) sont fournis en pluralité le long de la direction de largeur.

14. Dispositif d'enduction à filière à fente (100, 200) selon la revendication 12, dans lequel un filetage auquel le boulon de pression (190) peut être fixé est formé à l'intérieur du bloc conique (180).

15. Dispositif d'enduction à filière à fente (100, 200) selon la revendication 12, dans lequel le trou résiduel est formé de la surface arrière de la plaque supérieure (110) à la surface avant, la rainure est formée de la surface avant de la plaque supérieure (110) à la surface arrière, et le trou résiduel est formé à une position alignée avec la rainure.

16. Dispositif d'enduction à filière à fente (100, 200) selon la revendication 1, dans lequel un collecteur (150) pour loger un liquide de revêtement est prévu dans la plaque inférieure (120), et le collecteur (150) communique avec la fente (130).

17. Dispositif d'enduction à filière à fente (100, 200) selon la revendication 16, qui évacue et applique le liquide de revêtement sur un substrat à travers l'orifice d'évacuation (140), dans lequel la cale (160) présente une pluralité d'ouvertures par découpe intermittente d'une zone de celle-ci pour déterminer la largeur de revêtement de la couche de revêtement appliquée sur le substrat.

18. Dispositif d'enduction à filière à fente (100, 200) selon la revendication 17, dans lequel le bloc conique et le boulon de pression appuient sur la cale sans affecter l'ouverture pour empêcher l'écartement entre la plaque supérieure et la plaque inférieure de s'élargir.
